# EUROPÄISCHE PATENTANMELDUNG

(11) **EP 1 942 292 A1**
(43) Veröffentlichungstag der Anmeldung: **09.07.2008**
(21) Anmeldenummer: 08001770.0
(22) Anmeldetag: 02.11.2005
(51) Int. Cl.: F16J 13/24

(54) **Sicherheitsverschluss für unter Dampfdruck stehende Behälter von Haushaltsgeräten**

(30) Priorität: 09.11.2004 DE 202004017790 U; 19.03.2005 DE 202005004798 U
(62) Teilanmeldung aus: 05807325.5
(71) Anmelder: Reutter GmbH, 71336 Waiblingen (DE)
(72) Erfinder: Körber, René, 71397 Leutenbach (DE)
(74) Vertreter: Fuhlendorf, Jörn

(57) **Zusammenfassung**

Ein Sicherheitsverschluss (10) für unter Dampfdruck stehende Behälter für Geräte zu Haushaltszwecken ist mit einem auf eine Einfüllöffnung des Behälters schraubbaren Innenteil (12) und mit einem Außenteil (11) in Form einer Griffkappe versehen, wobei zwischen Innenteil (12) und Außenteil (11) ein Kupplungsglied (15) vorgesehen ist, das von einem durch den Behälterinnendruck gesteuerten Antrieb (14) entgegen der Wirkung einer Feder (49) axial bewegbar ist, derart, dass bei drucklosem Behälter zwischen Außenteil (11) und Innenteil (12) eine drehfeste Verbindung besteht, die bei unter Druck stehendem Behälter aufgehoben ist. Der Antrieb (14) für das Kupplungsglied (15) ist durch einen Ventilträger (16) gebildet, der innerhalb des Innenteils (12) axial bewegbar und gegen das Kupplungsglied entgegen der axialen Wirkung einer Feder (49) anlegbar ist. Des Weiteren ist ein innerhalb des Ventilträgers (16) angeordnetes und gegen die axiale Wirkung einer Überdruckfeder (64) bewegbar gehaltenes Überdruckventil (17) vorgesehen.

Um einen derartigen Sicherheitsverschluss zu schaffen, dessen druckbeaufschlagte Bauteile stabiler ausgeführt sind und damit beständiger arbeiten und dessen Außenteil gleichzeitig gegen eine unzulässig hohe Temperatur geschützt ist, ist vorgesehen, dass das Kupplungsglied (15) als auf dem Kopf stehendes Korbelement ausgebildet ist, dessen Boden (48) von einer Rückstelldruckfeder (49) beaufschlagt ist, die sich im Außenteil (11) abstützt, und dessen freier Randbereich innenumfangsseitig mit Verzahnungselementen (51) versehen ist, die entsprechend der axialen Stellung des Kupplungsgliedes (15) mit den außenumfangsseitigen Gegenverzahnungselementen (32) des Innenteil (12) in oder außer Eingriff sind, und des Korbelementes eine durchmesserkleinerer Betätigungsring (52) vorgesehen ist, der an mit dem Boden (48) verbundenen, längs des Umfanges verteilten Streben bzw. Stegen (53) hängend befestigt ist und der Ringstirn des Ventilträgers (16) in geringem Abstand gegenüberliegt.

## Beschreibung

Die vorliegende Erfindung bezieht sich auf einen Sicherheitsverschluss für unter Dampfdruck stehende Behälter für Geräte zu Haushaltszwecken, wie Dampfbügeleisen, Dampfreiniger und dergleichen, nach dem Oberbegriff des Anspruchs 1.

Bei einem derartigen aus der EP 0 744 566 A1 bekannten Sicherheitsverschluss das Kupplungsglied als Querstab ausgebildet, der im Ruhezustand zwischen radial gegenüberliegenden Zähnen des Innenteils auf diesem und dem Ventilträger liegt und in einem Sitz innerhalb des Außenteils axial beweglich gehalten ist. Das Überdruckventil innerhalb des zylindrischen Ventilträgers öffnet der Innenwandung des Außenteils unmittelbar gegenüberliegend.

Eine derartige Ausführung ist relativ unstabil und bringt bei ansprechendem Überdruckventil das Außenteil auf eine relativ hohe Temperatur.

Aufgabe der vorliegenden Erfindung ist es, einen Sicherheitsverschluss für unter Dampfdruck stehende Behälter für Geräte zu Haushaltszwecken der eingangs genannten Art zu schaffen, dessen druckbeaufschlagte Bauteile stabiler ausgeführt sind und damit beständiger arbeiten und dessen Außenteil gleichzeitig gegen eine unzulässig hohen Temperatur geschützt ist.

Zur Lösung dieser Aufgabe sind bei einem Sicherheitsverschluss der genannten Art die im Anspruch 1 angegebenen Merkmale vorgesehen.

Durch die erfindungsgemäßen Maßnahmen ist dadurch, dass das Korbelement zu seinem konzentrisch zur Mantelfläche hängend angeordneten durchmesserkleineren Betätigungsring hin mit umfangsseitigem Durchbrechungen versehen ist, in vorteilhafterweise erreicht, dass beim Überdruckabblasen heißer Dampf nicht in die hier aus Kunststoff vorgesehene Griffkappe gelangen kann.

Vorteilhafte Ausgestaltungen der Anordnung bzw. axialen Führung des Ventilträgers ergeben sich nach den Merkmalen des Anspruchs 2 und/oder 3.

Eine vorteilhafte Ausgestaltung des Überdruckventils ergibt sich nach den Merkmalen des Anspruchs 4.

Eine vorteilhafte Ausgestaltung der Halterung des Innenteils am Außenteil ergibt sich aus den Merkmalen des Anspruchs 5. Dabei ist in vorteilhafter Weise vorgesehen, dass die axialen Bohrungen einen Weg zur Außenumgebung bieten, was bei der möglichen Sicherheitsabblasfunktion von erheblichem Vorteil ist.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in längsgeschnittener Darstellung einen Sicherheitsverschluss für unter Dampfdruck stehende Behälter für Geräte zu Haushaltszwecken gemäß einem berorzugten Ausführungsbeispiel vorliegender Erfindung, in druckloser Ruhestellung,
- Figur 2: eine der Figur 1 entsprechende Darstellung des Sicherheitsverschlusses, jedoch in einer dem anstehenden Druck entsprechenden aktivierten Stellung,
- Figur 3: eine der Figur 1 entsprechende Darstellung des Sicherheitsverschlusses, jedoch in einer Stellung, in der im Behälter anstehender unzulässiger Überdruck abblasbar ist,

Der in der Zeichnung gemäß einem Ausführungsbeispiel dargestellte Sicherheitsverschluss 10 ist für unter Dampfdruck stehende Behälter für Geräte zu Haushaltszwecken, wie Dampfbügeleisen, Dampfreiniger und dergleichen bestimmt.

Der Sicherheitsverschluss 10 besitzt ein Außenteil in Form einer Griffkappe 11, vorzugsweise aus Kunststoff, sowie ein Innenteil 12, das mit einem nicht dargestellten Behälter vorzugsweise schraubend verbindbar ist. Zwischen Außenteil bzw. Griffkappe 11 und Innenteil 12 ist eine Kupplungsverbindung 13 vorgesehen, die in Abhängigkeit davon, ob im Behälter Druck ansteht oder nicht, eine drehfeste Verbindung zwischen Griffkappe 11 und Innenteil 12 löst oder schafft. Ein mit dem Inneren des Behälters in Wirkverbindung stehender Antrieb 14 für ein Kupplungsglied 15 der Kupplungsverbindung 13 ist durch einen Ventilträger 16 gebildet, der im Innenteil 12 zwischen zwei Endpositionen axial bewegbar ist.

Der Sicherheitsverschluss 10 besitzt außerdem ein Überdruckventil 17, das innerhalb des Ventilträgers 16 gehalten und sowohl zusammen mit diesem und als auch relativ zu diesem axial beweglich ist.

Das hier metallische Innenteil 12, das im folgenden auch als Ventilgehäuse bezeichnet wird, besitzt einen mit einem nicht dargestellten Außengewinde versehenen Schaft 21 zum einschraubenden Befestigen in einer Einfüllöffnung eines nicht dargestellten Druckbehälters. An den Schaft 21 schließt sich ein Außenumfangsflansch 22 an, der im Außenteil 11 drehbeweglich aber axial festgehalten ist und zwischen dem und dem Schaft 21 in einer Ringnut 23 ein O-Ring 24 gehalten ist, der zur Abdichtung des Ventilgehäuses 12 gegenüber der Behälteröffnung dient.

Der radial gestufte Umfangsflansch 22 dient zur einhängenden Befestigung in die offene Unterseite der Griffkappe 11, die hierzu mit einem den durchmessergrößeren Bereich des Umfangsflansches 22 untergreifenden Haltering 25 versehen ist. Der Umfangsflansch 22 ist mit über dem Umfang verteilt angeordneten (gestrichelt dargestellten) axialen Bohrungen 26 versehen, die auf einem Radius angeordnet sind, der an den Innenumfang des Halterrings 25 angrenzt. Der Schaft 21 besitzt unterhalb des O-Ringes 24 eine Innenringnut 27, in die ein Sicherungsring 28 beispielsweise in Form eines Seeger-Ringes eingesetzt ist. In Verlängerung des Schaftes 21 und etwa durchmessergleich schließt sich an der gegenüberliegenden Seite des Umfangsflansches 22 ein Zylinderansatz 29 an, der von einem mit einer konzentrischen axialen Bohrung 30 versehenen Boden 31 abgedeckt ist. Unmittelbar oberhalb des Umfangsflansches 22 ist der zylindrische Ansatz 29 außenumfangsseitig mit über den Umfang gleichmäßig verteilt angeordneten Vorsprüngen oder Zahnungen 32 versehen, die radial vorstehen und sich über eine relativ kurze axiale Länge erstrecken und die Teil der lösbaren Kupplungsverbindung 13 sind.

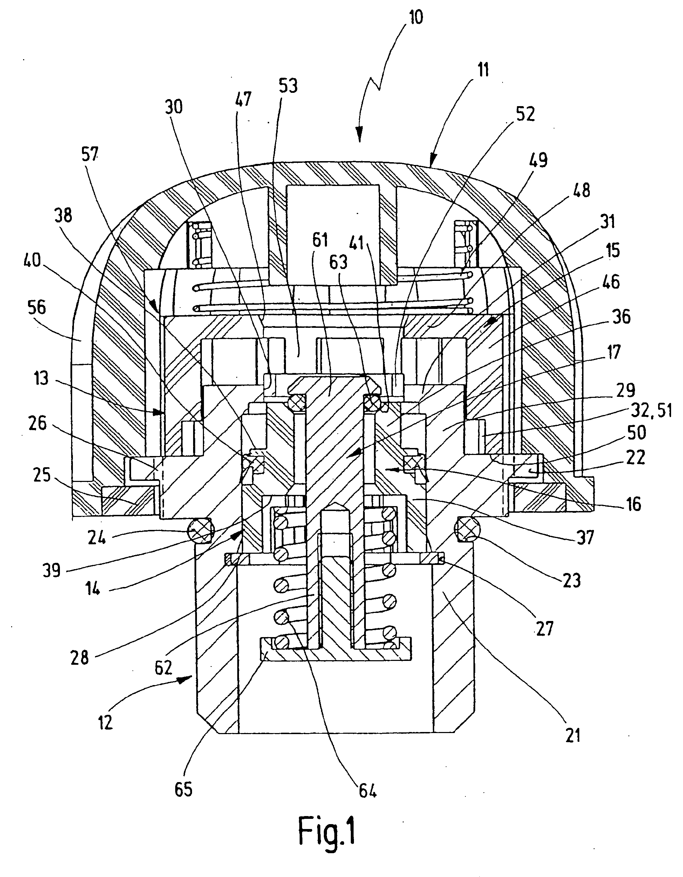

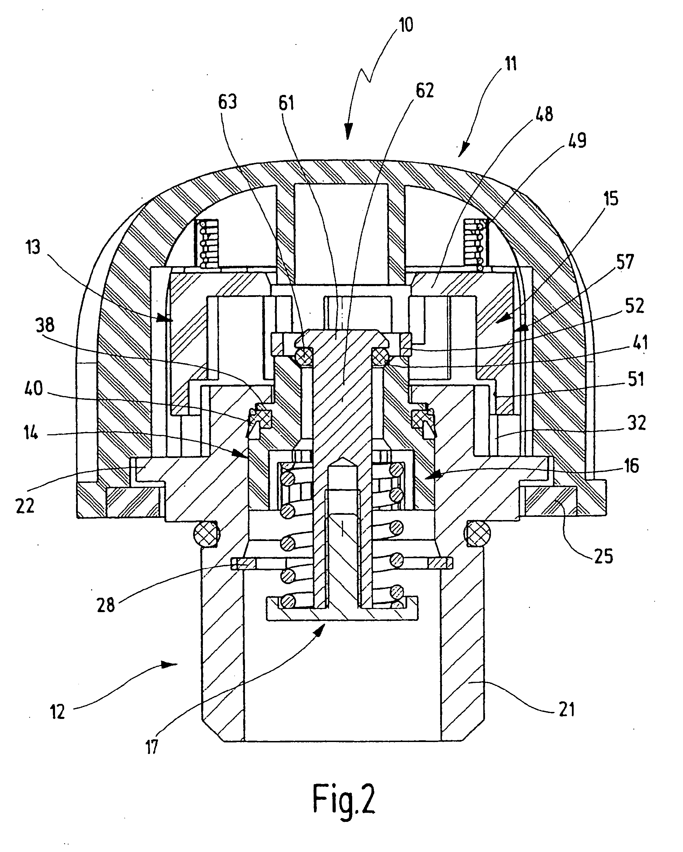

Innerhalb des Ventilgehäuses 12 ist der hier metallische Ventilträger 16 axial bewegbar angeordnet. Der hohle Ventilträger 16 besitzt einen gemäß den Figuren unteren durchmessergrößeren Teil 36 und einen oberen durchmesserkleineren Teil 37. Dadurch ergibt sich zwischen den beiden Teilen 36 und 37 sowohl eine Außenschulter 38, als auch eine Innenschulter 39. Der Außendurchmesser des außendurchmessergrößeren Teils 36 entspricht dem Innendurchmesser des zylindrischen Ansatzes 29 des Ventilgehäuses 12 und der Außendurchmesser des außendurchmesserkleineren Teils 37 ist etwas kleiner als der Innendurchmesser der Bohrungsdurchbrechung 30 im Boden 31 des Ventilgehäuses 12. Dadurch lässt sich der Ventilträger 16 zwischen einer in Figur 1 dargestellten Ruhestellung, in der die untere Ringstirn am Sicherungsring 28 anliegt, und einer in Figur 2 dargestellten aktiven Stellung, in der die Außenschulter 38 gegen eine Ringschulter des Bodens 31 gedrückt ist, axial bewegen.

Der Ventilträger 16 besitzt im Zwischenbereich zwischen den beiden Teilen 36 und 37 eine Formdichtung 40, die eine radial am Innenumfang des Ventilgehäuses 12 wirkende Dichtlippe und einen zur Anschlagschulter des Ventilgehäuses 12 hin wirkenden axialen Dichtringteil aufweist. Darüber hinaus ist der Ventilträger 16 an seiner im Durchmesser kleineren Teil 37 vorgesehenen Mündungsöffnung mit einem Innenkonussitz 41 versehen.

Das Kupplungsglied 15 der Kupplungsverbindung 13 hat die Form etwa eines hier aus Kunststoff geformten und in Einbaulage auf den Kopf stehenden Korbes. Das Kupplungsglied bzw. der Korb 15 besitzt einen undurchbrochenen radial äußeren zylindrischen Mantel 46 und einen mit einer konzentrischen Bohrungsausnehmung 47 versehenen Boden 48. Am Boden 48 stützt sich eine Rückstell-Druckfeder 49 ab. Die sich anderenends an der Innenseite der Griffkappe 11 abstützt. Die Rückstell-Druckfeder 49 drückt die freie Ringfläche 50 des Mantels 46 gegen die Oberseite des Umfangsflanschs 22 des Ventilgehäuses 12. Der Mantel 46 besitzt in einem Bereich nahe seiner Ringfläche 50 radial nach innen gerichtete und über einen bestimmten axialen Bereich verlaufende Vorsprünge bzw. Zahnungen 51, die Teil der Kupplungsverbindung 13 bilden und in der in Figur 1 dargestellten Ruheposition mit entsprechenden axialen Rinnen bzw. Rillen des Ventilgehäuses 12 in Eingriff sind und damit eine auch lösbare drehfeste Verbindung zwischen Kupplungsglied 15 und Ventilgehäuse 12 schalten. Eine ständige drehfeste Verbindung zwischen Griffkappe 11 und Ventilgehäuse 12 ergibt durch eine nicht im einzelnen dargestellte axial bewegbare Zahnungsverbindung 57.

Radial innerhalb des Mantels 46 und in axialem Abstand zum Boden 48 besitzt das Kupplungsglied 15 bzw. der Korb einen Betätigungsring 52, der in Ruhestellung nach Figur 1 in geringem axialem Abstand zur Öffnungsringfläche des durchmesserkleineren Teils 37 des Ventilträgers 16 angeordnet ist und einen diesem entsprechenden Außendurchmesser besitzt sowie sich teilweise innerhalb der Bohrungsausnehmung 30 des Bodens 31 des Ventilgehäuses 12 befindet. Der Betätigungsring 52 ist über axial verlaufende Stege 53 am Boden 48 des Korbes hängend befestigt.

Die Griffkappe 11 aus Kunststoff ist haubenartig geformt, mit Griffrillen 56 versehen und besitzt an ihrem gestuften offenen und mit dem Haltering 25 versehenen Ende eine Ringnutaufnahme für den Umfangsflansch 22 des Ventilgehäuses 12 für eine axial mit Spiel behaftete Verbindung und eine umfangsseitige Drehbewegung.

Innerhalb des Ventilträgers 16 ist das Überdruckventil 17 vorgesehen, das den Ventilträger 16 beidendig überragt. Das Überdruckventil 17 besitzt einen Ventilteller 61, dessen Außendurchmesser größer als ein Ventilstößel 62 ist, wobei an der Unterseite des Ventiltellers 61 und den Ventilstößel 62 umgebend ein O-Ring 63 vorgesehen ist, der in der Figur 1 dargestellten Ruheposition eine Abdichtung zwischen dem Überdruckventil 17 und dem Ventilträger 16 ermöglicht.

Für die Abdichtwirkung ist eine Überdruck-Druckfeder 64 verantwortlich, die sich einenends gegen eine Federhalteplatte 65 legt, die in das freie Ende des Ventilstößels 62 eingeschraubt ist. Das andere Ende der Druckfeder 64 stützt sich an der Innenschulter 39 des Ventilträgers 16 ab.

Die Funktion des auf einen Behälter aufgeschraubten Sicherheitsverschlusses 10 ist folgende:

In der in Figur 1 dargestellten Ruhestellung des Ventilträgers 16 ist der Behälter drucklos, so dass eine drehfeste Kupplungsverbindung 13 zwischen der Griffkappe 11 und dem Ventilgehäuse 12 besteht, so dass der Sicherheitsverschluss 10 auf den Behälter aufgeschraubt oder von diesem abgeschraubt werden kann.

Baut sich in dem Behälter ein Druck auf, was bedeutet, dass das sich im Behälter befindende Wasser zumindest teilweise in Dampf umgesetzt ist, wird der Ventilträger 16 zusammen mit dem Überdruckventil 17 entgegen der Wirkung der Rückstell-Druckfeder 49 axial zur Griffkappe 11 hin in die in Figur 2 dargestellte aktive Stellung verschoben. Diese axiale Bewegung entspricht der axialen Bewegung, um die Kupplungsverbindung 13 zu lösen, d.h. die Zahnungen 32 und Rillen 51 vom Ventilgehäuse 12 bzw. Kupplungsglied 15 außer Eingriff zu bringen, so dass die Griffkappe 11 gegenüber dem Ventilgehäuse 12 leer dreht und ein Abschrauben des Sicherheitsverschlusses 10 vom Behälter in diesem Druckzustand nicht möglich ist. Die Bewegung des Kupplungsgliedes 15 erfolgt dadurch, dass der druckbeaufschlagte Ventilträger 16 den Betätigungsring 52 und damit den Korb axial bewegt.

Die Rückstell-Druckfeder 49 kann das Kupplungsglied 15 erst dann wieder in die eine Kupplungsverbindung ermöglichende Ruhestellung zurückbewegen, wenn im Behälter wieder Außen- bzw. Normaldruck herrscht, das Wasser unter Dampfdruck wieder abgekühlt ist.

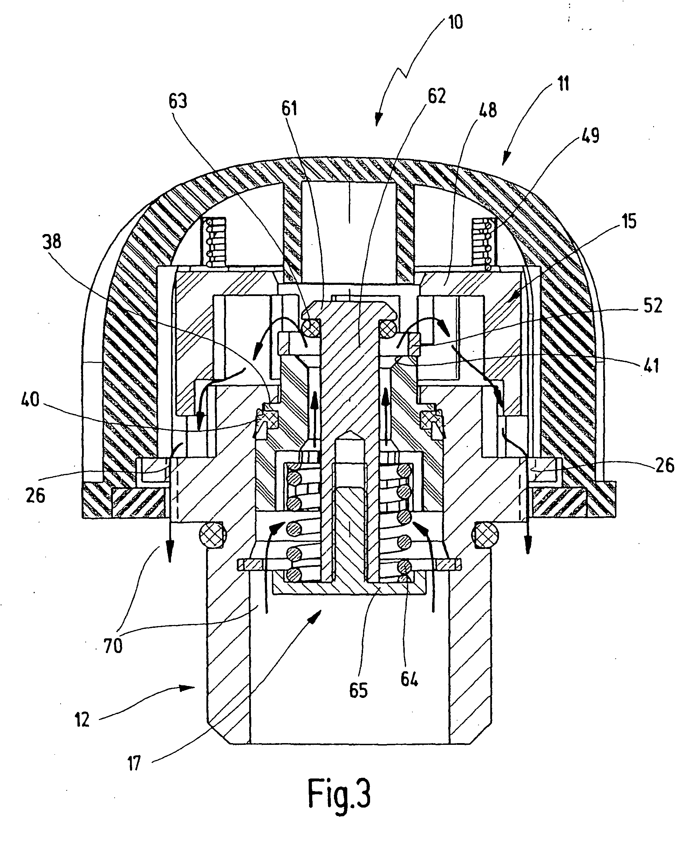

Sollte sich im Verlauf der aktiven Stellung (Figur 2) des Ventilträgers 16 der im Behälter herrschenden Druck aus irgendwelchen Gründen weiter erhöhen, und zwar derart, dass der dadurch entstehende Überdruck zu einem Bersten des Behälters führen könnte, wird das Überdruckventil 17 entgegen der Wirkung der Überdruck-Druckfeder 64 axial bewegt, und zwar nunmehr nicht mehr zusammen mit dem Ventilträger 16, sondern, da dieser am Anschlag ist, relativ zu diesem, wie sich dies aus Figur 3 ergibt. Diese axiale Bewegung des Überdruckventils 17 gegenüber dem Ventilträger 16 ergibt ein Lösen der Dichtungsverbindung zwischen Ventilträger 16 und Überdruckventil 17, so dass sich ein Ausblasweg bzw. Entlüftungsweg zwischen dem Inneren des Behälters bzw. des Ventilgehäuses 12 und der Außenumgebung öffnet. Dieser Ausblasweg oder Abluftöffnungsweg führt von Innerhalb des mit dem Behälter in Verbindung stehenden Schaftes 21 und den Ringraum zwischen Überdruckventil 17 und Ventilträger 16, durch den geöffneten Ventilsitz sowie durch die radialen Öffnungen zwischen den den Betätigungsring 52 am Korb haltenden Stegen 53 und zurückführend zwischen dem Mantel 46 des Korbes und dem Zylinderansatz 29 des Ventilgehäuses 12 sowie durch die axialen Bohrungen 26 im Umfangflansch 22 hindurch nach unterhalb der Griffkappe 11 und nach außen (Pfeile 70).

Nach auf diese Weise abgelassenem Überdruck drückt die Überdruck-Druckfeder 64 das Überdruckventil 17 wieder in dessen mit dem Ventilträger 16 dichtende aktive Stellung gemäß Figur 2.

## Patentansprüche

1. Sicherheitsverschluss (10) für unter Dampfdruck stehende Behälter für Geräte zu Haushaltszwecken, wie Dampfbügeleisen, Dampfreiniger und dergleichen, mit einem auf eine Einfüllöffnung des Behälters schraubbaren Innenteil (12) und mit einem Außenteil (11) in Form einer Griffkappe, wobei zwischen Innenteil (12) und Außenteil (11) ein Kupplungsglied (15) vorgesehen ist, das von einem durch den Behälterinnendruck gesteuerten Antrieb (14) entgegen der Wirkung einer Feder (49) axial bewegbar ist, derart, dass bei drucklosem Behälter zwischen Außenteil (11) und Innenteil (12) eine drehfeste Verbindung besteht, die bei unter Druck stehendem Behälter aufgehoben ist, wobei der Antrieb (14) für das Kupplungsglied (15) durch einen Ventilträger (16) gebildet ist, der innerhalb des Innenteils (12) axial bewegbar und gegen das Kupplungsglied (15) entgegen der axialen Wirkung einer Feder (49) anlegbar ist, und mit einem innerhalb des Ventilträgers (16) angeordneten und gegen die axiale Wirkung einer Überdruckfeder (64) bewegbar gehaltenen Überdruckventil (17), **dadurch gekennzeichnet, dass** das Kupplungsglied (15) als auf dem Kopf stehendes Korbelement ausgebildet ist, dessen Boden (48) von einer Rückstelldruckfeder (49) beaufschlagt ist, die sich im Außenteil (11) abstützt, und dessen freier Randbereich innenumfangsseitig mit Verzahnungselementen (51) versehen ist, die entsprechend der axialen Stellung des Kupplungsgliedes (15) mit dem außenumfangsseitigen Gegenverzahnungselement (32) des Innenteil (12) in oder außer Eingriff sind, und dass in axialem Abstand zum Boden (48) des Korbelementes eine durchmesserkleinerer Betätigungsring (52) vorgesehen ist, der an mit dem Boden (48) verbundenen, längs des Umfanges verteilten Streben bzw. Stegen (53) hängend befestigt ist und der Ringstirn des Ventilträgers (16) in geringem Abstand gegenüberliegt.

2. Sicherheitsverschluss nach Anspruch 1, **dadurch gekennzeichnet, dass** der Ventilträger (16) außenumfangsseitig mit einem radial gegen die Innenumfangsseite des Innenteils (12) wirkenden Dichtungselement (40) versehen ist, das in der unter Druck verfahrenen Position des Ventilträgers (16) gegen ein Anschlagschulter des Innenteils (11) axial abdichtet.

3. Sicherheitsverschluss nach Anspruch 1 oder 2, **dadurch gekennzeichnet, dass** die drucklose Ruheposition des Ventilträgers (16) durch einen radial inneren Sicherungsring (28) im Innenteil (12) als Anschlag gebildet ist.

4. Sicherheitsverschluss nach Anspruch 4, **dadurch gekennzeichnet, dass** das Überdruckventil (17) den Ventilträger (16) axial durchdringt und mit seinem Ventilteller (61) auf dem dem Kupplungsglied (15) zugewandten Ende des Ventilträgers (16) dichtend aufliegt und an seinem abgewandten Ende mit einer Federhalteplatte (65) versehen ist, zwischen der und einer Innenschulter des Ventilträgers (16) die als Druckfeder ausgebildete Überdruckfeder (64) gehalten ist.

5. Sicherheitsverschluss nach mindestens einem der vorhergehenden Ansprüche, **dadurch gekennzeichnet, dass** das Innenteil (12) mittels eines außenumfangsseitigen Ringflansches (22) im Außenteil (11) hängend axial gehalten jedoch umfangsseitig bewegbar ist, wobei der Ringflansch (22) über den Umfang verteilte axiale Bohrungen (26) aufweist.
